# EUROPÄISCHE PATENTANMELDUNG

(11) **EP 1 394 961 A1**
(43) Veröffentlichungstag der Anmeldung: **03.03.2004**
(21) Anmeldenummer: 02018484.2
(22) Anmeldetag: 16.08.2002
(51) Int. Cl.: H04B 7/005

(54) **Funkkommunikationssystem und Verfahren zur Sendeleistungssteuerung einer Sendestation**

(71) Anmelder: SIEMENS AKTIENGESELLSCHAFT, 80333 München (DE)
(72) Erfinder: Dieterich, Hans, Dr., 89075 Ulm (DE); Schmid, Joachim, 89597 Munderkingen (DE); Fahrner, Achim, 89077 Ulm (DE)

(57) **Zusammenfassung**

Das Verfahren zur Steuerung der Sendeleistung P einer Sendestation MS sieht vor, dass eine Empfangsstation BS wiederholt einen Qualitätsparameter SIR_{E} eines von der Sendestation MS ausgesendeten und von der Empfangsstation empfangenen Signals S ermittelt und mit einem Sollwert SIR_{T} vergleicht. Die Empfangsstation BS übermittelt in Abhängigkeit von Ergebnissen R der Sollwertvergleiche Kommandos C zur Sendeleistungssteuerung an die Sendestation. Die Sendestation MS berücksichtigt die Kommandos C bei der Einstellung der Sendeleistung P. Eine Modifizierung des Einflusses des Ergebnisses R wenigstens eines der Sollwertvergleiche auf die Sendeleistung P der Sendestation MS erfolgt, sofern aufeinanderfolgende Ergebnisse der Sollwertvergleiche eine vorgegebene Bedingung erfüllen, wobei die Modifizierung darin besteht, dass eine ohne die Modifizierung vorzunehmende Veränderung der Sendeleistung der Sendestation MS aufgrund der Modifizierung unterbleibt.

## Beschreibung

Die Erfindung betrifft ein Verfahren zur Steuerung der Sendeleistung einer Sendestation in einem Funkkommunikationssystem sowie ein entsprechendes Funkkommunikationssystem, eine Sendestation und eine Empfangsstation für ein solches Funkkommunikationssystem.

Durch das Third Generation Partnership Project (3GPP) erfolgt die Erarbeitung eines UMTS-Standards für die dritte Mobilfunkgeneration. Die Regelung der Sendeleistung im Uplink (also in Richtung eines mobilen Endgeräts zur Basisstation, in deren Zelle sich das Endgerät befindet) erfolgt sowohl nach der FDD-Variante als auch nach der TDD-Variante dieses Standards in einem geschlossenen Regelkreis. Die Basisstation ermittelt das Signal-zu-Rauschverhältnis für von einer Mobilstation empfangenen Signalen und leitet daraus Kommandos für die Sendeleistungseinstellung (sogenannte TPC-Bits, Transmit Power Control) ab. Diese Kommandos werden von der Basisstation zur Mobilstation übertragen, die in Abhängigkeit der Kommandos ihre Sendeleistung erhöht oder erniedrigt.

Im Standardisierungsbeitrag TSGR1 5(99)666 "Variable Step Size for Power Over-Shoot Protection Based on Sequential Analysis of Power Control Bits" für das 3GPP TSG RAN WG1 Meeting vom 1. bis 4. Juni 1999 in Cheju, Korea wird die Problematik des Rayleigh Fadings im Zusammenhang mit der Leistungsregelung der Mobilstation beschrieben. Aufgrund der Bewegung der Mobilstation ändert sich der Einfluss des Fadings auf die Empfangsqualität an der Basisstation fortwährend. Bei einem Fading-Einbruch verschlechtert sich die Empfangsqualität, so dass die Basisstation über die Leistungssteuerungskommandos eine Erhöhung der Sendeleistung der Mobilstation über einen gewissen Zeitraum anfordert. Endet dann der Fading-Einbruch, verbessert sich die Empfangsqualität an der Basisstation schlagartig, so dass die Sendeleistung der Mobilstation zunächst viel zu hoch eingestellt ist. Da die periodisch ausgesendeten TPC-Bits nur anzeigen, in welche Vorzeichenrichtung sich die Sendeleistung der Mobilstation bei den nachfolgenden Aussendungen ändern soll, und bei angenommener konstanter Schrittweite der Sendeleistungsänderung, hat diese viel zu hohe Sendeleistung nach dem Ende eines Fading-Einbruchs zur Folge, dass es relativ lange dauert, bis die Mobilstation wieder mit angemessener, niedrigerer Sendeleistung sendet. Außerdem ist es problematisch, mit der konstanten Schrittweite für die Sendeleistungseinstellung der Mobilstation die notwendige hohe Sendeleistung während des relativ kurzen Fading-Einbruchs auch zu erreichen. Daher wurde in dem oben genannten Standardisierungsbeitrag vorgeschlagen, nach einer festgelegten Anzahl von aufeinander folgenden TPC-Bits, die eine Erhöhung der Sendeleistung der Mobilstation verlangen, die Schrittweite für die Umsetzung der nachfolgenden TPC-Bits zwischenzeitlich zu erhöhen, so dass die höhere Sendeleistung schneller erreicht wird. Tritt anschließend ein TPC-Bit auf, dass eine Erniedrigung der Sendeleistung verlangt, soll die Schrittweite sogar noch mehr erhöht werden, so dass die Sendeleistung noch schneller wieder erniedrigt wird. Die Umschaltung der Schrittweite erfolgt in Abhängigkeit einer in der Mobilstation durchgeführten Untersuchung der empfangenen TPC-Bits.

Es ist Aufgabe der vorliegenden Erfindung, ein Verfahren anzugeben, dass das Problem des Rayleigh Fadings im Zusammenhang mit der Regelung der Sendeleistungssteuerung der Mobilstation auf andere Weise löst.

Diese Aufgabe wird mit einem Verfahren gemäß Anspruch 1, einem Funkkommunikationssystem gemäß Anspruch 10, einer Sendestation für ein solches Funkkommunikationssystem gemäß Anspruch 11 und einer Empfangsstation gemäß Anspruch 12 gelöst.

Vorteilhafte Aus- und Weiterbildungen der Erfindung sind Gegenstand abhängiger Ansprüche.

Gemäß dem erfindungsgemäßen Verfahren zur Steuerung der Sendeleistung einer Sendestation in einem Funkkommunikationssystem ermittelt eine Empfangsstation wiederholt, also beispielsweise periodisch, einen Qualitätsparameter (beispielsweise das Signal-zu-Rauschverhältnis oder eine Bit- oder Blockfehlerrate) eines von der Sendestation ausgesendeten und von der Empfangsstation empfangenen Signals und vergleicht diesen mit einem Sollwert. Die Empfangsstation erzeugt in Abhängigkeit von Ergebnissen dieser Sollwertvergleiche Kommandos zur Sendeleistungssteuerung und übermittelt diese an die Sendestation. Die Sendestation berücksichtigt die Kommandos bei der Einstellung der Sendeleistung des von ihr ausgesendeten Signals. Eine Modifizierung des Einflusses des Ergebnisses wenigstens eines der Sollwertvergleiche auf die Sendeleistung der Sendestation erfolgt dann, wenn aufeinanderfolgende Ergebnisse der Sollwertvergleiche eine vorgegebene Bedingung erfüllen, wobei die Modifizierung darin besteht, dass eine ohne die Modifizierung vorzunehmende Veränderung der Sendeleistung der Sendestation aufgrund der Modifizierung unterbleibt.

Die Erfindung eignet sich zur Anwendung in beliebigen Funksystemen mit mobilen oder stationären Sende- oder Empfangsstationen. Sie eignet sich aber insbesondere zur Anwendung in Mobilfunksystemen, in denen entweder die Sendestation oder die Empfangsstation eine mobile Station und die andere Station eine Basisstation ist. Die Erfindung eignet sich daher sowohl zur Regelung der Sendeleistung im Uplink als auch im Downlink, dass heißt in der Übertragungsrichtung von der Basisstation zur Mobilstation.

Die nach dem erfindungsgemäßen Verfahren vorgesehene vorgegebene Bedingung für die aufeinanderfolgenden Ergebnisse der von der Empfangsstation durchgeführten Sollwertvergleiche kann beispielsweise darin bestehen, dass für eine zuvor festgelegte Anzahl der Ergebnisse der Sollwert für den Qualitätsparameter jeweils überschritten oder unterschritten wird. Für das jeweilige Funkkommunikationssystem kann ermittelt werden, wie viele aufeinanderfolgende Ergebnisse der Sollwertvergleiche übereinstimmen, dass heißt eine Abweichung des Istwertes vom Sollwert des Qualitätsparameters in jeweils gleicher Vorzeichenrichtung anzeigen, sofern ein normaler Betriebszustand vorliegt. Wird diese maximale Anzahl von gleichen aufeinanderfolgenden Ergebnissen der Sollwertvergleiche überschritten, kann mit großer Sicherheit auf einen atypischen Betriebszustand des Funkkommunikationssystems geschlossen werden. Dies kann beispielsweise daran liegen, dass ein Fading-Einbruch aufgetreten ist, so dass es vorteilhaft ist, im Folgenden auf wenigstens einen der Sollwertvergleiche anders als beim typischen Betrieb zu reagieren.

Nach einer ersten Ausführungsform der Erfindung erfolgt die Modifizierung des Einflusses des Ergebnisses des wenigstens einen der Sollwertvergleiche auf die Sendeleistung der Sendestation durch die Empfangsstation, in dem diese wenigstens eines der von ihr auszusendenden Kommandos in der Weise erzeugt, dass es nicht dem Ergebnis des Sollwertvergleichs entspricht. Das bedeutet, dass beispielsweise statt einer aufgrund des Sollwertvergleichs erforderlichen Erhöhung der Sendeleistung über das entsprechende Kommando eine Erniedrigung der Sendeleistung oder ihr Gleichbleiben gefordert wird. Für die Sendestation ergibt sich hierbei keine Veränderung. Sie muss lediglich die von ihr empfangenen Kommandos zur Sendeleistungssteuerung in üblicher Weise umsetzen.

Nach einer alternativen Ausführungsform erfolgt die Modifizierung des Einflusses des Ergebnisses des wenigstens einen Sollwertvergleichs auf die Sendeleitung der Sendestation durch die Sendestation selbst, in dem diese ihre Sendeleistung für wenigstens eines der von ihr empfangenen Kommandos nicht entsprechend diesem Kommando verändert. Das bedeutet, dass die Empfangsstation die Kommandos zur Sendeleistungssteuerung zwar in üblicher Weise generiert, dass die Sendestation die von ihr empfangenen Kommandos jedoch nicht alle in gleicher Weise umsetzt. Das Vorliegen der vorgegebenen Bedingung für die aufeinanderfolgenden Ergebnisse der von der Empfangsstation durchgeführten Sollwertvergleiche kann die Sendestation dabei einfach anhand der von ihr empfangenen Kommandos feststellen, da die Kommandos ja in Abhängigkeit der Sollwertvergleiche erzeugt wurden.

Nach einer Weiterbildung der Erfindung hat die Modifizierung zur Folge, dass statt der Veränderung der Sendeleistung in einer ersten Vorzeichenrichtung (die sich normalerweise aufgrund des Sollwertvergleiches ergäbe) entweder die Sendeleistung unverändert bleibt oder in einer zweiten Vorzeichenrichtung geändert wird. Beispielsweise bewirkt die erste Vorzeichenrichtung eine Erhöhung und die zweite Vorzeichenrichtung eine Erniedrigung der Sendeleistung der Sendestation. Für den Fall des Rayleigh Fadings bedeutet dies, dass beispielsweise nach einer Folge von Sollwertvergleichen, die einen zu niedrigen Istwert des Qualitätsparameters ergeben (was zur Aussendung von Kommandos zur Sendeleistungssteuerung durch die Basisstation führt, die eine Erhöhung der Sendeleistung durch die Sendestation verlangen), bei einem erneuten Sollwertvergleich, der einen zu niedrigen Istwert des Qualitätsparameters ergibt, keine weitere Erhöhung der Sendeleistung der Sendestation erfolgt, sondern beispielsweise eine Erniedrigung. Hierdurch wird berücksichtigt, dass die Fading-Einbrüche nur sehr kurzzeitig auftreten, so dass beispielsweise nach einem typischen Wert von zwei Sollwertvergleichen, die eine Erhöhung der Sendeleistung erfordern würden, davon ausgegangen werden kann, dass der Fading-Einbruch bereits in Kürze beendet sein wird. Aufgrund des zeitlichen Versatzes der Durchführung der Sollwertvergleiche in der Empfangsstation und der Umsetzung der Kommandos zur Sendeleistungssteuerung in der Sendestation sowie des Empfangs der von der Sendestation ausgesendeten Signale mit der neu eingestellten Sendeleistung kann dann damit gerechnet werden, dass eine weitere Erhöhung der Sendeleistung durch die Mobilstation aufgrund des zuletzt durchgeführten Sollwertvergleiches sich erst nach Beendigung des Fading-Einbruchs sich an der Empfangsstation bemerkbar macht und somit zu einer dann unnötig hohen Sendeleistung der Mobilstation führt. Daher ist es vorteilhaft, nach dem typischen Wert von beispielsweise zwei Sollwertvergleichen, die einen zu niedrigen Istwert des Qualitätsparameters ergeben, bei einem nachfolgenden dritten Sollwertvergleich, der das gleiche Ergebnis hat, statt einer weiteren Leistungserhöhung eine Leistungserniedrigung oder zumindest ein Gleichbleiben der Sendeleistung der Sendestation vorzusehen.

Nach einer Weiterbildung der Erfindung erfolgt die Modifizierung des Einflusses des Ergebnisses eines der Sollwertvergleiche auf die Sendeleistung der Sendestation nur dann, wenn das Ergebnis dieses Sollwertsvergleichs eine Veränderung der Sendeleistung in einer ersten Vorzeichenrichtung erfordern würde, während eine Modifizierung unterbleibt, sofern das Ergebnis dieses Sollwertvergleichs eine Veränderung der Sendeleistung in einer zweiten Vorzeichenrichtung erfordern würde. Betrifft beispielsweise die erste Vorzeichenrichtung eine Erhöhung und die zweite Vorzeichenrichtung eine Erniedrigung der Sendeleistung, bedeutet dies im Falle eines auftretenden Rayleigh Fadings, dass eine zu starke Erhöhung der Sendeleistung vermieden wird, während eine Begrenzung in Richtung niedrigerer Sendeleistungen nicht erfolgt. Hierdurch tritt ein stabilisierender Effekt auf. Es wird erleichtert, die Sendeleistung zu erniedrigen, als sie zu erhöhen. Da es insbesondere in Mobilfunksystemen eine große Anzahl von mobilen Teilnehmerstationen gibt, wird durch eine Begrenzung der Erhöhung ihrer Sendeleistung erreicht, dass gegenseitige Störungen reduziert werden. Dadurch wird ein unkontrolliertes gegenseitiges Aufschaukeln der Sendeleistungen der Stationen verhindert.

Eine Weiterbildung der Erfindung sieht vor, dass die Sendestation und/oder die Empfangsstation mobile Stationen sind und die Modifizierung nur vorgenommen wird, wenn sich die Sendestation oder die Empfangsstation mit einer mittleren Geschwindigkeit bewegen, während bei niedrigeren oder höheren Geschwindigkeiten die Modifizierung unterbleibt. Bei niedrigen Geschwindigkeiten und bei hohen Geschwindigkeiten ist der Einfluss des Rayleigh Fadings auf die Sendeleistungssteuerung normalerweise kaum vorhanden. Eine längere Folge von Leistungserhöhungen tritt dort normalerweise nicht auf. Dagegen kann genau dies in einem mittleren Geschwindigkeitsbereich der Fall sein. Dieser Bereich liegt für das UMTS-FDD-System in einem Bereich von 5 bis 50 km/h. Aufgrund der typischen Ausdehnung eines Fading-Einbruchs ergibt sich, dass bereits nach zwei aufeinanderfolgenden Leistungserhöhungen eine weitere Leistungserhöhung nur aufgrund eines Fading-Einbruchs notwendig wird und daher zu einem Überschwingen der Sendeleistungseinstellung führen würde, so dass es sinnvoll ist, eine nachfolgende dritte Erhöhung der Sendeleistung nicht durchzuführen, sondern stattdessen die Sendeleistung abzusenken, um sie an den normalen Betriebszustand ohne Fading-Einbruch anzupassen.

Da, wie erläutert, der Einfluss von Fading-Einbrüchen auf die Sendeleistungsregelung bei unterschiedlichen Geschwindigkeiten der Empfangsstation oder Sendestation unterschiedlich ist, sieht eine weitere vorteilhafte Weiterbildung der Erfindung vor, dass die aufeinanderfolgenden Ergebnisse der Sollwertvergleiche, die für eine Prüfung auf Vorliegen der vorgegebenen Bedingungen herangezogen werden, eine Anzahl aufweist, die von einer Geschwindigkeit der Sendestation oder der Empfangsstation abhängt. Hierdurch kann auf die unterschiedlich starke Beeinflussung des Fadings auf die Einstellung der Sendeleistung der Sendestation bei unterschiedlichen Geschwindigkeiten flexibel reagiert werden.

Das erfindungsgemäße Funkkommunikationssystem sowie die Sendestation und die Empfangsstation für ein Funkkommunikationssystem gemäß den nebengeordneten Ansprüchen weisen die für die Durchführung des erfindungsgemäßen Verfahrens notwendigen Komponenten auf und sind in entsprechender Weise ausgebildet.

Die Erfindung wird im Folgenden anhand von in den Figuren dargestellten Ausführungsbeispielen näher erläutert. Es zeigen:
- Figur 1: einen Ausschnitt eines erfindungsgemäßen Funkkommunikationssystems in Gestalt eines Mobilfunksystems,
- Figur 2: eine Basisstation des Mobilfunksystems aus Figur 1,
- Figur 3: eine Mobilstation des Mobilfunksystems aus Figur 1 und
- Figur 4: zeitlich aufeinanderfolgende beispielhafte Werte von in den Figuren 2 und 3 eingetragenen Parametern.

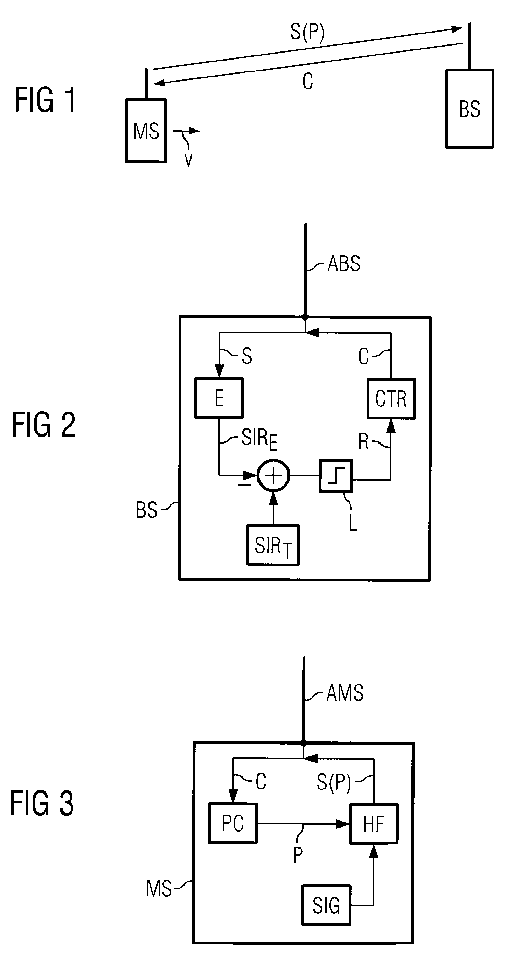

Figur 1 zeigt einen Ausschnitt eines Mobilfunkssystems mit einer Empfangsstation BS in Form einer Basisstation und einer Sendestation MS in Form einer Mobilstation. Die Erfindung ist jedoch selbstverständlich auch auf andere Funksysteme mit mobilen Stationen (wie beispielsweise drahtlose lokale Netze, WLAN, oder selbstorganisierende bzw. Ad-hoc-Netze) oder mit stationären Stationen anwendbar. Weiterhin ist die Erfindung auch für die Sendeleistungsregelung im Downlink (also in Richtung von der Basisstation zur Mobilstation) anwendbar, obwohl in diesem Ausführungsbeispiel die Sendeleistungsregelung im Uplink erläutert wird.

Die Sendestation MS in Figur 1 überträgt Signale S mit einer Sendeleistung P zur Empfangsstation BS. Die Empfangsstation BS ermittelt durch einen Sollwertvergleich eines Istwertes des Signal-zu-Rauschverhältnisses des von ihr empfangenen Signals S mit einem entsprechenden vorgegebenen Sollwert periodisch Kommandos C in Form von einzelnen Bits, die die Sendestation MS anweisen, entweder eine Leistungserhöhung oder eine Leistungserniedrigung für die Aussendung der Signale S vorzunehmen. Die Sendestation MS in Figur 1 bewegt sich mit einer Geschwindigkeit v.

Gemäß Figur 2 weist die Empfangsstation BS aus Figur 1 eine Antenne ABS auf, über die sie die Signale S von der Sendestation MS empfängt. Zur Demodulation und Dekodierung der empfangenen Signale S weist die Empfangsstation BS die üblichen und dem Fachmann bekannten Einrichtungen auf, die in Figur 2 nicht dargestellt wurden. Dargestellt wurden nur die für die Leistungsregelung der Sendestation MS notwendigen Komponenten. Hierzu gehört eine Schätzeinrichtung E zum Schätzen des Istwertes des Signal-zu-Rauschverhältnisses SIR_{E} des empfangenen Signals. Dieser Istwert SIR_{E} wird mit einem in der Empfangsstation BS gespeicherten Sollwert für das Signal-zu-Rauschverhältnis SIR_{T} verglichen. Dieser Vergleich erfolgt durch eine Differenzbildung des Sollwertes SIR_{T} und des Istwertes SIR_{E} und der nachfolgenden Zuführung dieses Differenzsignals zu einem nichtlinearen Stellglied in Form eines Zweipunkt-Reglers L, an dessen Ausgang ein Ergebnis R des Sollwertvergleichs in digitaler Form vorliegt. Die Sollwertvergleiche werden periodisch durchgeführt, so dass es zu einer Folge von aufeinanderfolgenden Ergebnissen R kommt. Die Ergebnisse R werden einer Steuereinrichtung CTR zugeführt, die in Abhängigkeit von den Ergebnissen R jeweils ein Kommando C erzeugt, dass die Empfangsstation BS anschließend über ihre Antenne ABS an die Sendestation MS ermittelt.

Figur 3 zeigt die Sendestation MS aus Figur 1. Dargestellt sind nur die für das Verständnis der Erfindung notwendigen Komponenten. Über eine Antenne AMS empfängt die Sendestation MS die von der Empfangsstation BS erzeugten Kommandos C und führt diese einer Einrichtung PC zur Berechnung ihrer Sendeleistung P zu. Ausgangssignale (z.B. Sprachsignale) einer Signalerzeugungseinheit SIG werden über ein Hochfrequenzteil HF mit der von der Einrichtung PC ermittelten Sendeleistung P als Signale S über die Antenne AMS ausgesendet.

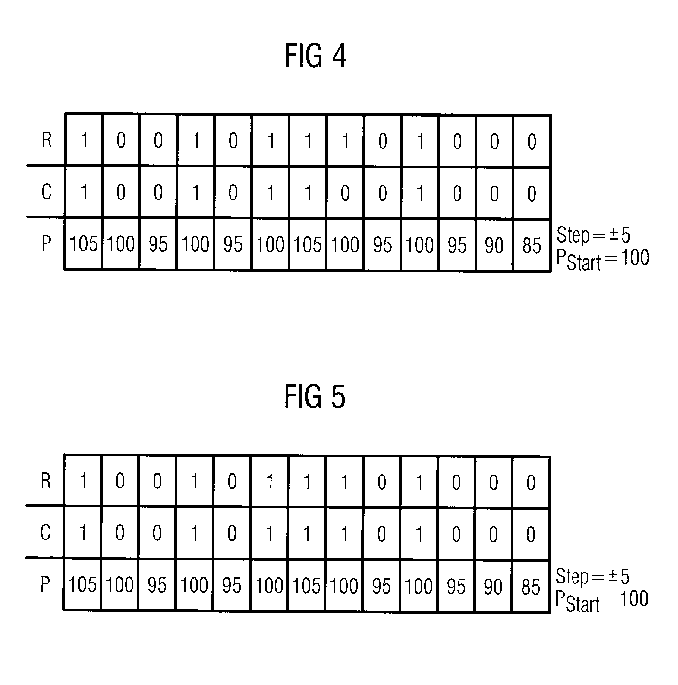

Figur 4 zeigt für ein erstes Ausführungsbeispiel der Erfindung die Werte der Ergebnisse R und der Kommandos C, die von der Empfangsstation BS gemäß Figur 2 erzeugt werden sowie die resultierende Sendeleistung P der Sendestation MS. Bei diesem ersten Ausführungsbeispiel erfolgt eine Modifizierung des Einflusses des Ergebnisses eines der Sollwertvergleiche auf die Sendeleistung P der Sendestation MS durch die Empfangsstation BS. Figur 4 zeigt in der ersten Zeile der Tabelle aufeinanderfolgende Werte der Ergebnisse R, die von der Empfangsstation BS aufgrund der von ihr durchgeführten Sollwertvergleiche gemäß Figur 2 erzeugt werden. In der Figur 4 bedeutet der Wert "1" für eines der Ergebnisse R, das der Sollwert SIR_{T} größer als der Istwert SIR_{E} ist. Dagegen bedeutet eine "0", dass der Istwert SIR_{E} den Sollwert SIR_{T} überschritten hat.

In der zweiten Zeile von Figur 4 sind die von der Steuereinrichtung CTR in Figur 2 erzeugten Kommandos C dargestellt, die jeweils einem der Ergebnisse R zugeordnet sind. Die Kommandos C bestehen aus einem Bit. Eine "1" signalisiert der Sendestation MS eine vorzunehmende Leistungserhöhung für ihre Sendeleistung P, während eine "0" eine vorzunehmende Leistungsabsenkung signalisiert. In der dritten Zeile von Figur 4 sind normierte Werte für die Sendeleistung P der Sendestation MS aufgeführt. Dabei wurde ein Startwert Pₛₜₐᵣₜ von 100 unterstellt. Die Schrittgröße Step beträgt ±5. Bei diesem Ausführungsbeispiel der Erfindung setzt die Sendestation MS die von ihr empfangenen Kommandos C in eine Änderung ihrer Sendeleistung P um, ohne dass sie eine Modifizierung vornimmt. Dass heißt bei jeder "1" eines Kommandos C erfolgt eine Erhöhung der Sendeleistung P um +5, während bei einem Wert "0" des Kommandos C eine Absenkung des vorherigen Werts der Sendeleistung um -5 erfolgt.

Die Steuereinrichtung CTR der Empfangsstation BS kontrolliert fortwährend, ob mehr als zwei aufeinanderfolgende Ergebnisse R jeweils eine Erhöhung der Sendeleistung der Sendestation MS erfordern würden (dass heißt der Istwert SIR_{E} des Signal-zu-Rauschverhältnisses ist geringer als der Sollwert SIR_{T)}. In der Figur 4 haben die sechsten bis achten in der Tabelle eingetragenen Ergebnisse R jeweils den Wert "1". Sobald die Steuereinrichtung CTR der Empfangsstation BS dies erkennt, wird für das dritte der aufeinanderfolgenden Ergebnisse mit dem Wert "1" das Kommando C nicht, wie üblich, mit dem Wert "1" erzeugt sondern auf den Wert "0" gesetzt. Dagegen wird in allen anderen Fällen, in denen einem Ergebnis R mit dem Wert "1" nicht bereits wenigstens zwei Ergebnisse R mit demselben Wert vorausgehen, das Kommando C immer mit demselben Wert wie das zugehörige Ergebnis R erzeugt. Auf diese Weise kommt es mit dem achten Kommando C statt zu einer geforderten Erhöhung der Sendeleistung P der Sendestation MS zu einer Absenkung. Es wurde dabei angenommen, dass aufgrund des gewählten Periodizitätszeitraumes für die Ermittlung der Istwerte SIR_{E} des Signal-zu-Rauschverhältnisses und der anhand dieser durchgeführten Sollwertvergleiche für die betrachtete Geschwindigkeit v der Sendestation MS ein Fading-Einbruch nach zwei empfangenen Kommandos C bereits beendet ist, so dass die Absenkung der Sendeleistung P statt ihrer Erhöhung nach Beendigung des Fading-Einbruchs zu einem angemessenerem Wert der Sendeleistung P führt.

Figur 5 zeigt für dieselbe Sequenz von aufeinanderfolgenden Ergebnissen R ebenfalls die Kommandos C und die Sendeleistung P für ein zweites Ausführungsbeispiel der Erfindung. Bei diesem erfolgt die Modifizierung des Einflusses der Ergebnisse R eines der Sollwertvergleiche auf die Sendeleistung P der Sendestation MS, anders als in Figur 4, nicht durch die Steuereinrichtung CTR der Empfangsstation BS, sondern durch die Sendestation MS selbst, und zwar durch ihre Steuereinrichtung PC (siehe Figur 3). Aus diesem Grunde stimmen die Werte der Kommandos C in Figur 5 mit den Werten der Ergebnisse R jeweils überein. Nun überprüft die Steuereinrichtung PC der Sendestation MS die von ihr empfangenen Kommandos C auf das Vorliegen dreier aufeinanderfolgender Kommandos C mit dem Wert "1". Solange dieser Fall nicht vorliegt, verändert die Empfangsstation MS ihre Sendeleistung P entsprechend den Kommandos C, also im Falle einer "1" durch eine Erhöhung um +5, im Falle einer "0" durch eine Erniedrigung um -5. Das sechste bis achte aufeinanderfolgende Kommando C in Figur 5 haben nun aber den Wert "1", was von der Steuereinrichtung PC der Sendestation MS festgestellt wird. Aus diesem Grunde setzt sie das achte Kommando C nicht, wie üblich, in eine weitere Erhöhung der Sendeleistung um, sondern nimmt stattdessen eine Erniedrigung der Sendeleistung P vor, was normalerweise nur bei Empfang eines Kommandos C mit dem Wert "O" der Fall wäre.

Unabhängig davon, ob die Modifizierung des Einflusses des Ergebnisses R auf die Sendeleistung P der Sendestation MS gemäß Figur 4 durch Maßnahmen der Empfangsstation BS oder gemäß Figur 5 durch Maßnahmen der Sendestation MS selbst erfolgt, ergibt sich zu jedem Zeitpunkt derselbe Wert für die Sendeleistung P.

Für das anhand der Figuren 4 und 5 geschilderte Verfahren wurden jeweils drei aufeinanderfolgende Sollwertvergleiche für die Entscheidung über die Durchführung einer Modifizierung berücksichtigt. Dies gilt für einen angenommenen mittleren Geschwindigkeitsbereich der Sendestation MS von etwa 5 bis 50 km/h. Bei niedrigeren oder höheren Geschwindigkeiten v ist eine andere Anzahl von aufeinanderfolgenden Sollwertvergleichen, die für diese Entscheidung herangezogen werden, vorgesehen. Insbesondere kann aber auch vorgesehen sein, dass das beschriebene Verfahren der Modifizierung ausschließlich im mittleren Geschwindigkeitsbereich durchgeführt wird, während es bei niedrigeren und höheren Geschwindigkeiten überhaupt nicht erfolgt.

Eine Überkompensation der durch das Rayleigh Fading verursachten Kanalstörungen kommt vor allem dann in Frage, wenn der Kanal sich von einem tiefen Fading-Einbruch schnell erholt. Dies ist für UMTS-FDD typischerweise bei Fahrzeuggeschwindigkeiten von 5 bis 50 km/h der Fall. Dann kann es vorkommen, dass die Leistungsregelung nicht schnell genug die Sendeleistung zurückregeln kann. Im Empfangssignal an der Empfangsstation entstehen dann signifikante Überschwinger (Power Over-Shoots). Durch diese Überkompensation wird zuviel Leistung verbraucht was sich insbesondere in batteriebetriebenen Sendestationen negativ auswirkt. Außerdem entstehen dadurch verstärkte Störungen für die anderen Teilnehmer des Funksystems.

Oft wird es bei niedrigen bzw. hohen Geschwindigkeiten auch bei Beibehaltung des gemäß der Figuren 4 und 5 beschriebenen Verfahrens (gleiche Anzahl von aufeinanderfolgenden Ergebnissen R bzw. Kommandos C, die die beschriebene Modifizierung auslösen) nicht zu der beschriebenen Modifizierung kommen. Dies liegt daran, dass dort üblicherweise praktisch nie drei aufeinanderfolgende Sollwertvergleiche als Ergebnis eine Unterschreitung des Sollwerts SIR_{T} ergeben. Die Modifizierung erfolgt gemäß Figuren 4 und 5 jedoch genau nur in diesem Fall.

Sowohl in Figur 4 als auch in Figur 5 erfolgt bei einer beliebigen Anzahl von aufeinanderfolgenden Ergebnissen R bzw. Kommandos C mit dem Wert "0" keine Modifizierung des Einflusses der Ergebnisse R der Sollwertvergleiche auf die Sendeleistungseinstellung der Sendestation MS.

## Patentansprüche

1. Verfahren zur Steuerung der Sendeleistung (P) einer Sendestation (MS) in einem Funkkommunikationssystem, bei dem
- eine Empfangsstation (BS) wiederholt einen Qualitätsparameter (SIR_{E}) eines von der Sendestation (MS) ausgesendeten und von der Empfangsstation (BS) empfangenen Signals (S) ermittelt und mit einem Sollwert (SIR_{T}) vergleicht,
- die Empfangsstation (BS) in Abhängigkeit von Ergebnissen (R) der Sollwertvergleiche Kommandos (C) zur Sendeleistungssteuerung erzeugt und an die Sendestation (MS) übermittelt,
- die Sendestation (MS) die Kommandos (C) bei der Einstellung der Sendeleistung (P) des von ihr ausgesendeten Signals (S) berücksichtigt
- und eine Modifizierung des Einflusses des Ergebnisses (R) wenigstens eines der Sollwertvergleiche auf die Sendeleistung (P) der Sendestation (MS) erfolgt, sofern aufeinander folgende Ergebnisse (R) der Sollwertvergleiche eine vorgegebene Bedingung erfüllen, wobei die Modifizierung darin besteht, dass eine ohne die Modifizierung vorzunehmende Veränderung der Sendeleistung der Sendestation (MS) aufgrund der Modifizierung unterbleibt.

2. Verfahren nach Anspruch 1, bei dem
die Modifizierung durch die Empfangsstation (BS) erfolgt, indem diese wenigstens eines der von ihr auszusendenden Kommandos (C) in der Weise erzeugt, dass es nicht dem Ergebnis (R) des Sollwertvergleichs entspricht.

3. Verfahren nach Anspruch 1, bei dem
die Modifizierung durch die Sendestation (MS) erfolgt, indem diese ihre Sendeleistung (P) für wenigstens eines der von ihr empfangenen Kommandos (C) nicht entsprechend diesem Kommando verändert.

4. Verfahren nach einem der vorstehenden Ansprüche, bei dem die Modifizierung zur Folge hat, dass statt der Veränderung der Sendeleistung (P) in einer ersten Vorzeichenrichtung (+) entweder die Sendeleistung unverändert bleibt oder in einer zweiten Vorzeichenrichtung (-) geändert wird.

5. Verfahren nach Anspruch 4, bei dem
die erste Vorzeichenrichtung (+) eine Erhöhung und die zweite Vorzeichenrichtung (-) eine Erniedrigung der Sendeleistung (P) betrifft.

6. Verfahren nach einem der vorstehenden Ansprüche, bei dem eine Modifizierung des Einflusses des Ergebnisses (R) eines der Sollwertvergleiche auf die Sendeleistung (P) der Sendestation (MS) nur dann erfolgt, wenn das Ergebnis (R) dieses Sollwertvergleichs eine Veränderung der Sendeleistung in einer ersten Vorzeichenrichtung (+) erfordern würde, während eine Modifizierung unterbleibt, sofern das Ergebnis (R) dieses Sollwertvergleichs eine Veränderung der Sendeleistung in einer zweiten Vorzeichenrichtung (-) erfordern würde.

7. Verfahren nach einem der vorstehenden Ansprüche, bei dem
- die Sendestation (MS) und/oder die Empfangsstation (BS) mobile Stationen sind
- und die Modifizierung nur vorgenommen wird, wenn sich die Sendestation (MS) oder die Empfangsstation (BS) mit einer mittleren Geschwindigkeit (v) bewegen, während bei niedrigeren oder höheren Geschwindigkeiten die Modifizierung unterbleibt.

8. Verfahren nach einem der vorstehenden Ansprüche, bei dem
- die Sendestation (MS) und/oder die Empfangsstation (BS) mobile Stationen sind
- und die aufeinander folgenden Ergebnisse (R) der Sollwertvergleiche, die für eine Prüfung auf Vorliegen der vorgegebenen Bedingung herangezogen werden, eine Anzahl aufweist, die von einer Geschwindigkeit (v) der Sendestation (MS) oder der Empfangsstation (BS) abhängt.

9. Verfahren nach einem der vorstehenden Ansprüche, bei dem
- die Sendestation (MS) und die Empfangsstation (BS) Funkstationen in einem Mobilfunksystem sind
- und eine der beiden Stationen (MS) eine Mobilstation und die andere Station (BS) eine Basisstation ist.

10. Funkkommunikationssystem
- mit wenigstens einer Sendestation (MS) und einer Empfangsstation (BS) ,
- dessen Empfangsstation (BS) so ausgebildet ist, dass sie wiederholt einen Qualitätsparameter (SIR_{E}) eines von der Sendestation (MS) ausgesendeten und von der Empfangsstation (BS) empfangenen Signals (S) ermittelt und mit einem Sollwert (SIR_{T}) vergleicht,
- dessen Empfangsstation (BS) so ausgebildet ist, dass sie in Abhängigkeit von Ergebnissen (R) der Sollwertvergleiche Kommandos (C) zur Steuerung der Sendeleistung (P) der Sendestation (MS) erzeugt und an die Sendestation übermittelt,
- dessen Sendestation (MS) so ausgebildet ist, dass sie die Kommandos (C) bei der Einstellung der Sendeleistung (P) des von ihr ausgesendeten Signals (S) berücksichtigt,
- und das so ausgebildet ist, dass eine Modifizierung des Einflusses des Ergebnisses (R) wenigstens eines der Sollwertvergleiche auf die Sendeleistung (P) der Sendestation (MS) erfolgt, sofern aufeinander folgende Ergebnisse (R) der Sollwertvergleiche eine vorgegebene Bedingung erfüllen, wobei die Modifizierung darin besteht, dass eine ohne die Modifizierung vorzunehmende Veränderung der Sendeleistung (P) der Sendestation (MS) aufgrund der Modifizierung unterbleibt.

11. Sendestation (MS) für ein Funkkommunikationssystem,
- die so ausgebildet ist, dass sie von einer Empfangsstation (BS) des Funkkommunikationssystems ausgesendete Kommandos (C) bei der Einstellung der Sendeleistung (P) eines von ihr ausgesendeten Signals (S) berücksichtigt, wobei die Kommandos (C) abhängig von Ergebnissen (R) von durch die Empfangsstation (BS) wiederholt durchgeführten Vergleichen eines Qualitätsparameters (SIR_{E}) des von der Sendestation (MS) ausgesendeten und von der Empfangsstation (BS) empfangenen Signals (S) mit einem Sollwert (SIR_{T}) sind,
- die so ausgebildet ist, dass durch sie eine Modifizierung des Einflusses des Ergebnisses (R) wenigstens eines der Sollwertvergleiche auf die Sendeleistung (P) der Sendestation (MS) erfolgt, sofern aufeinander folgende Ergebnisse (R) der Sollwertvergleiche eine vorgegebene Bedingung erfüllen, wobei die Modifizierung darin besteht, dass eine ohne die Modifizierung vorzunehmende Veränderung der Sendeleistung (P) der Sendestation (MS) aufgrund der Modifizierung unterbleibt,
- die so ausgebildet ist, dass sie zur Prüfung auf Vorliegen der vorgegebenen Bedingung die von ihr empfangenen Kommandos (C) auswertet,
- und die so ausgebildet ist, dass die Modifizierung erfolgt, indem die Sendestation (MS) ihre Sendeleistung für wenigstens eines der von ihr empfangenen Kommandos (C) nicht entsprechend diesem Kommando verändert.

12. Empfangsstation (BS) für ein Funkkommunikationssystem,
- die so ausgebildet ist, dass sie wiederholt einen Qualitätsparameter (SIR_{E}) eines von einer Sendestation (MS) des Funkkommunikationssystems ausgesendeten und von der Empfangsstation (BS) empfangenen Signals (S) ermittelt und mit einem Sollwert (SIR_{T}) vergleicht,
- die so ausgebildet ist, dass sie in Abhängigkeit von Ergebnissen (R) der Sollwertvergleiche Kommandos (C) zur Steuerung der Sendeleistung (P) der Sendestation (MS) erzeugt und an die Sendestation übermittelt,
- die so ausgebildet ist, dass durch sie eine Modifizierung des Einflusses des Ergebnisses (R) wenigstens eines der Sollwertvergleiche auf die Sendeleistung (P) der Sendestation (MS) erfolgt, sofern aufeinander folgende Ergebnisse (R) der Sollwertvergleiche eine vorgegebene Bedingung erfüllen, wobei die Modifizierung darin besteht, dass eine ohne die Modifizierung vorzunehmende Veränderung der Sendeleistung (P) der Sendestation (MS) aufgrund der Modifizierung unterbleibt,
- und die so ausgebildet ist, dass die Modifizierung erfolgt, indem die Empfangsstation (BS) wenigstens eines der von ihr auszusendenden Kommandos (C) in einer Weise ändert, dass es nicht dem Ergebnis (R) des Sollwertvergleichs entspricht.
